# EUROPEAN PATENT SPECIFICATION

(11) **EP 3 803 091 B1**
(45) Date of publication and mention of the grant of the patent: **20.07.2022**
(21) Application number: 18730701.2
(22) Date of filing: 05.06.2018
(51) Int. Cl.: F02M 21/02, F16L 37/56, F16K 31/04, F16L 9/18, F16L 1/00, F16K 27/12

(54) **A GAS SUPPLY SYSTEM**
DOPPELWANDIGE GASVENTILEINHEIT
UNITÉ DE SOUPAPE POUR GAZ À DOUBLE PAROI

(43) Date of publication of application: 14.04.2021
(73) Proprietor: Wärtsilä Finland Oy, 65100 Vaasa (FI)
(72) Inventor: HÖGNABBA, Tomas, 65380 Vaasa (FI); KUUSISAARI, Marko, 65380 Vaasa (FI); WIDJESKOG, Klaus, 65380 Vaasa (FI)
(74) Representative: Genip Oy
(86) International application number: PCT/EP2018/064740
(87) International publication number: WO 2019/233561

(56) References cited:
- WO-A1-2017/220106
- CN-U- 206 735 220
- CN-U- 207 120 352
- US-A- 5 656 999
- US-B1- 6 476 723

## Description

### Technical field

The present invention relates to a gas supply system comprising a gas pipe for transporting gas and an auxiliary device arranged to the gas pipe, and an enclosure enclosing the gas pipe and the auxiliary device, and being provided with an inlet and an outlet, in which gas supply system the gas pipe is arranged to extend inside the enclosure from the inlet of the enclosure to the outlet of the enclosure, according to the preamble of claim 1.

### Background art

A natural gas as a fuel for internal combustion engines in marine vessels has become more common because of the environmental reasons. At the same time the equipment for handling and regulating gas fuel is subjected to stringent safety regulations. Fuel systems for feeding gaseous fuel to an internal combustion engine in a marine vessel are commonly constructed such that a fuel supply line runs inside, i.e. is enclosed by a barrier wall system, in order to prevent direct leakage to surroundings should the fuel supply line leak. It is also known to provide such a fuel system with a separate gas valve unit before each engine, into which certain components of the fuel system, like shut-off valves and pressure regulators, are assembled in centralized manner. The gas valve unit comprises an enclosure formed by a barrier wall system.

EP 2032428 B1 discloses a fuel system for gas driven piston engine in a marine vessel, which gas is stored in at least one fuel storage tank in the vessel as liquefied gas. The fuel feeding system comprises a separate fuel feed tank in which the gas is in liquid phase and at elevated pressure. The gas is also in liquid phase in the fuel storage tank, in which, however, prevails only the hydrostatic pressure caused by the liquid gas. In this kind of fuel system situations may occur in which excess gas need to purged from the tank, an often that means admission of gas into the atmosphere.

WO 2017/220106 A1 discloses a gas valve unit, which is connected to a gas introduction gas pipe and a gas consumer in a marine vessel. The gas valve unit comprises a valve member configured to operate as a closing valve for the fuel gas pipe. The gas valve unit are provided with an enclosure of collecting possible leak gas and preventing that gas to spread directly to the surrounding air.

In such a gas valve unit the valve and its actuator are installed inside the pressure proof enclosure. In such case access to the actuator requires opening of the enclosure. Any access door of the enclosure must be sealed accordingly to endure the required pressure. This in turn means that the attachment and sealing must be very robust, and therefore the opening of the enclosure for service the instruments inside the enclosure is time consuming and laborious. CN206735220 U discloses a slideable lid for a screw feeder, the lid being an arc-shaped segment of the tubular screw feeder.

An object of the invention is to provide a gas supply system in which the maintenance of the valve actuator is considerably improved compared to the prior art solutions.

### Disclosure of the Invention

According to the invention, the problem is solved by the technical features of claim 1. Further advantageous embodiments of the invention are defined by the dependent claims.

According to an embodiment of the invention gas supply system comprises a gas pipe for transporting gas, a valve arranged to the gas pipe, an enclosure for enclosing the gas pipe and the valve, and an inlet and an outlet in the enclosure, in which gas supply system the gas pipe is arranged to extend inside the enclosure from the inlet of the enclosure to the outlet of the enclosure. The enclosure is of tubular form comprising a tubular first part and a tubular second part, and the first part and the second part are at least partly one inside the other and at least one of which configured axially slideable in respect to the other. Further, the enclosure is provided with an access opening, wherein at least the other one of the first and the second part is configured to cover the access opening in its first axial position and uncover the access opening in its second axial position.

According to an embodiment of the invention the first part has a cross sectional shape which is similar to a cross sectional shape of the second part.

According to an embodiment of the invention the first part and the second part have circular cross section.

According to an embodiment of the invention the first part and the second part are coaxially arranged in respect to each other.

According to an embodiment of the invention the first part has a first end and the second part has a first end, and that the first ends are at least partly axially one inside the other. The first end of the first part is provided with a radially inwards extending first flange, and the first end of the second part is provided with a radially outwards extending second flange, wherein the first flange is arranged outside the second part of the enclosure, and the second flange is arranged inside the first part of the enclosure.

According to an embodiment of the invention the first flange has an inner diameter and the second flange has an outer diameter wherein the inner diameter is smaller than the outer diameter, such that the first flange is prevented from axially passing by the second flange.

According to an embodiment of the invention the second part of the enclosure is provided with a circular groove arranged at axial distance from the second flange wherein the first part of the enclosure and the second part of the enclosure are releasably locked by a ring element arranged into the groove such that it axially presses the first flange against the second flange.

According to an embodiment of the invention the valve is operable by subjecting a rotational movement to the drive shaft of the valve, the gas supply system further comprising a shaft lead-through unit releasably connected to the second part of the enclosure in gas tight manner, into which shaft lead-through unit the drive shaft is arranged so as to extend from inside to outside of the enclosure, and the drive shaft and the actuating shaft are arranged in force transmission connection with each other by a coupling which is configured to allow mutual lateral displacement of the ends of the drive shaft and the actuating shaft.

According to an embodiment of the invention the shaft lead-through unit is releasably connected to the second part of the enclosure.

According to an embodiment of the invention the shaft lead-through unit comprises a flange part provided with a cylindrical opening into which the drive shaft is assembled rotationally and in gas tight manner.

According to an embodiment of the invention the shaft lead-through unit is configured to be assembled and/or disassembled from outside the enclosure.

According to an embodiment of the invention that the actuating shaft is configured to be assembled and/or disassembled from outside the enclosure.

According to an embodiment of the invention the coupling comprise a first engagement hub at the end of the drive shaft of the valve and a second engagement hub at the end of the actuating shaft and a floating member between the first and the second engagement hub.

According to an embodiment of the invention the floating member has a first form engagement with the first engagement hub configured to enable transmission of torque between the floating member and the first engagement hub, and the floating member has a second form engagement with the second engagement hub configured to enable transmission of torque between the second engagement hub to the floating member.

According to an embodiment of the invention the first form engagement is configured such that the floating member is movable in first lateral direction only in respect to the first axis of rotation and the second form engagement is configured such that the floating member is movable in second lateral direction only in respect to the second axis of rotation.

According to an embodiment of the invention the first engagement hub of the coupling is provided with a lateral rectangular recess at its end face, and that the floating member is rectangular having its sides shorter than sides of the recess such that the floating member is fitted into the recess, and the floating member is provided with rectangular cut-out circumscribed by a periphery section, and the second engagement hub is formed to be laterally rectangular and it has a side length shorter than the sides of the recess in the floating member, and the second engagement hub is arranged into the recess of the floating member.

According to an embodiment of the invention the second engagement hub is arranged to extend axially inside the first engagement hub and the floating member.

The exemplary embodiments of the invention presented in this patent application are not to be interpreted to pose limitations to the applicability of the appended claims. The verb "to comprise" is used in this patent application as an open limitation that does not exclude the existence of also unrecited features. The term "lateral" means direction perpendicular to the direction of the first rotational axis of the drive shaft. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a gas supply system according to an embodiment of the invention,
Figure 2 illustrates the gas supply system of the Figure 1 having its access opening opened,
Figure 3 illustrates a gas supply system according to another embodiment of the invention,
Figure 4 illustrates a detail of the gas supply system according to the embodiment of the Figure 3,
Figure 5 illustrates a detail of the gas supply system according to the embodiment of the Figure 3 in other position,
Figure 6 illustrates a coupling of a gas supply system according to an embodiment of the invention,
Figure 7 illustrates a section of a gas supply system according to another embodiment of the invention,
Figure 8 illustrates a coupling of a gas supply system according to another embodiment of the invention and
Figure 9 illustrates a coupling of a gas supply system according to another embodiment of the invention.

### Detailed Description of Drawings

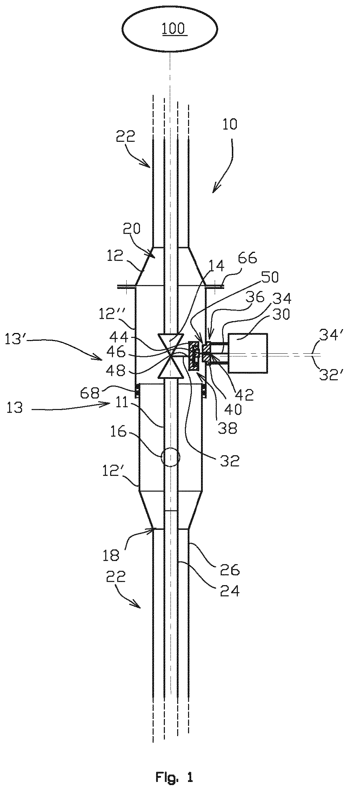

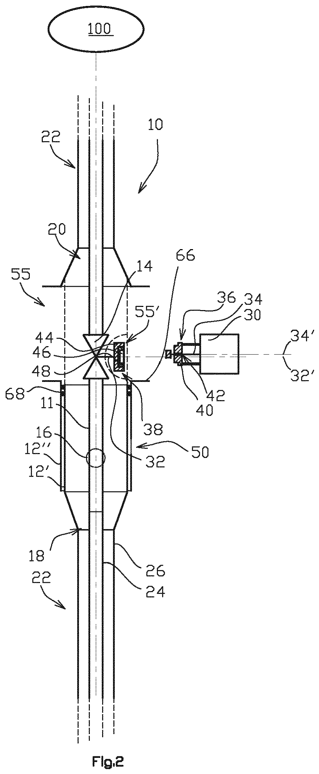

Figures 1 and 2 depicts schematically a gas supply system 10 according to an embodiment of the invention. The gas supply system is intended to be used in connection with a gas consumer, advantageously a gas fuelled internal combustion piston engine 100. The gas supply system 10 is arranged before or upstream in gas flow direction of each engine, into which gas supply system certain auxiliary devices of the fuel system, like valves, filters, gas analyzers and pressure regulators etc. are assembled in centralized manner. The gas supply system 10 comprise an enclosure 12 which is in the embodiment of figure 1 is in a form of a so called pressure vessel in tubular form. In gas the enclosure 12 is provided with a main gas valve 14 of engine as its auxiliary system the enclosure may be referred to as a gas valve unit. Even if according to an embodiment of the invention, in normal operation of the gas supply system 10, the space inside the enclosure 12 is not under very high pressure the enclosure 12 is arranged to be pressure proof i.e. it can be constructed as a pressure vessel. This way it can handle safely possible leak of the fuel system. The gas supply system 10 and particularly the enclosure 12 can be of various forms and it can be mounted in different positions depending e.g. on its form or floor space available. The enclosure 12 encloses a gas pipe 11 and at least one valve 14 which is connected to the gas pipe 11 and a number of desired optional auxiliary devices 16 therein. One or several of these in any combination are referred to as auxiliary devices. The auxiliary devices may comprise necessary equipment for measuring, analysing, filtering or otherwise handling the gas. The gas supply system 10 further comprises an inlet 18 and an outlet 20 by means of which piping 22 for the gas delivery system of a gas consumer (not shown) communicates with the enclosure 12 and the valve 14 and the auxiliary devices 16 therein. Depending on the actual gas consumer the gas supplied to the gas consumer may be practically any gas which requires the effects obtainable by the invention, for example natural gas, petroleum gas, synthetic gas, hydrogen or a mixture thereof. Figure 1 shows a position where the enclosure 12 is closed and figure 2 a position where the enclosure 12 is open for e.g. maintenance.

The external piping 22 as well as the inlet 18 and the outlet 20 comprise an inner gas pipe 24 and an outer gas pipe 26 which are advantageously arranged coaxially in respect to each other. The inner gas pipe 24 is connected to the gas pipe 11 in the enclosure 12 where the valve 14 and a number of desired optional auxiliary devices 16 are arranged, forming the internal piping of the enclosure 12. The inner gas pipe 24 enters into the enclosure 12 via the inlet 18 and forms a continuous gas tight internal piping 11 inside the enclosure 12 before it exits the enclosure via the outlet 20. Thus, the gas pipe 11 is arranged to extend inside the enclosure 12 from the inlet 18 of the enclosure 12 to the outlet 20 of the enclosure 12. The outer gas pipe 26 at the inlet and the outlet is arranged to open into the space of the enclosure 12. The walls of the inner gas pipe 11 and the enclosure 12 form a space in between which space is in continuous flow communication with the space between the inner gas pipe 24 and the outer gas piper 26 of external piping 22.

In addition to the enclosure 12, the outer gas pipe 26 is also configured to be pressure proof and they connected with each other in gas tight manner. The enclosure is enclosing the gas pipe 11 and the valve 14. This way a possible leak in the gas pipe 11, 24, which is the primary flow channel for the gas fuel, can be led safely to a desired handling of the leak gas, such as back to a gas tank via the space inside the outer gas pipe 26 and the enclosure 12. The gas supply system comprise an enclosure 12 which is in tubular form arranged coaxially with the gas pipe 11, but having greater diameter than the gas pipe. The enclosure 12 comprises a tubular first part, which is referred to in the embodiment of figures 1 and 2 as a body part 12' and a second part, which is referred to in the embodiment of figure 1 and 2 as a sleeve part 12".

The first part 12' and the second part 12" are configured axially slideable in respect to each other. In the embodiment of figure 1 the first part 12' is immovable body part and the second part is movable in respect to the first part 12'. The slideability of the second part is made possible so that the first part 12' and the second part are at least partly one inside the other. In other words the first part 12' and the second part 12' are at least partly axially overlapping when the enclosure 12 is closed. Figure 1 and 2 shows also that the tubular first part 12' is arranged coaxially with the second part 12". Advantageously, the first part 12' has a cross sectional shape which is similar to a cross sectional shape of the second part 12". In the embodiment of the figures 1 and 2 the cross sectional shape is circular, which is the most preferable shape. The sleeve part 12" has a diameter different (greater or smaller) from the diameter of the tubular body 12' such that the sleeve part is axially movable in respect to the body part as is shown in the figures 1 and 2.

The enclosure 12, and particularly in the figures 1 and 2 first part 12' is provided with an access opening 55 via which it is possible to have an access to any auxiliary device, particularly the valve 14, in the gas supply system 10. As is disclosed in the figure 1 the second part 12" is configured to cover the access opening 55 in its first axial position and uncover the access opening in its second axial position as is shown in the figure 2. The position of the second part 12" is changeable by axial movement. The sleeve part 12" is attachable in a sealed manner to the tubular body of the first part 12' by a coupling flanges 66 or alike arranged in one end of the sleeve part 12" and the body part 12'. As is shown in the figures 1 and 2 the first part 12' has a first axial end 13 and the second part 12" has a first axial end 13', and the first ends 13, 13' of the parts of the enclosure are at least partly one inside the other. In this embodiment the first part 12' of the enclosure is inside the second part 12", the part being coaxially with each other. The sleeve part 12" is also sealed to the body at its end opposite to the flange 66 by means of suitable sealing 68, such as o-rings.

The valve 14 enclosed by the enclosure 12 in the gas supply system 10 comprises and is operated by an actuator 30, such as a pneumatic actuator, which is located outside the enclosure 12. The valve has a drive shaft 32 having a first axis of rotation 32'. This way the valve is operable by subjecting a rotational movement to the drive shaft 32 of the valve. The rotational movement of the drive shaft 32 can be provided by an actuating shaft 34 arranged to the gas supply system 10. The actuating shaft 34 has a second axis of rotation 34'. The actuating shaft 34 is in force transmission connection with the actuator 30. The actuator shaft 34 is adapted to the drive shaft 32 so that the mutual position of the first axis of rotation 32' and the second axis of rotation 34' may change or may be misaligned. As can be seen in the figure 1 the first axis of rotation 32' and the second axis of rotation 34' are substantially parallel with but at a distance from each other. This way the installation of the valve 14 inside the enclosure 12 and the installation of the actuator outside the enclosure 12 tolerates linear or angular misalignment to some extent and thus makes the fabricating and assemble of the supply system considerably more straightforward. This also absorbs any difference in thermal expansion of the inner gas pipe 11 and the enclosure 12. Additionally, there is no need to open the enclosure 12 in order to access the actuator 30 for e.g. servicing work.

The gas supply system 10 comprises a shaft lead-through unit 36, which is releasably connected to an outer wall of the enclosure 10 in gas tight manner, particularly to the second part 12" thereof. The actuating shaft 34 is arranged rotatably to the shaft lead-through unit 36 so as to extend from inside to outside of the enclosure 10. Also the actuating shaft 34 is sealed to the shaft lead-through unit 36 in a gas tight manner. The shaft lead-through unit 36 comprises a flange part 40 which is provided with a cylindrical opening 42, which may be for example a bore or a releasable sleeve, through which the actuating shaft 34 is extending in supported and sealed manner. The flange part may be provided with additional lead-through system by means of which for example data or electric cables, gas or other fluid can be led in gas tight manner.

The gas supply system 10 comprises a force transmission coupling 38, configured to transmit rotational force between the actuating shaft 34 and the drive shaft 32, in such a manner that the first axis of rotation 32' and the second axis of rotation 34' are substantially parallel with but at a distance from each other. Substantially parallel should be understood so that the axes of rotation may form an angle of <= 5 degrees between them.

The shaft lead-through unit 36 is arranged to be assembled and/or disassembled from outside the enclosure. Also the actuating shaft 34 is arranged to be assembled and/or disassembled from outside the enclosure 12 so that it can be coupled to the drive shaft 32. The coupling 38 is configured to allow mutual lateral displacement of the ends of the drive shaft 32 and the actuating shaft 34. In other words the coupling 38 makes it possible that substantially parallel shafts 32,34 need not to be on the same axis of rotation. The coupling 38 comprise a first engagement hub 44 at the end of the drive shaft 32 of the valve 14 and a second engagement hub 46 at the end of the actuating shaft 34 and a floating member 48 between the first and the second engagement hub. The first engagement hub 44, floating member 48 and the second engagement hub 46 are mutually dimensionally formed so as to transmit torque between the engagement hubs via the floating member 48. The floating member 48 is arranged between the first engagement hub 44 and the second engagement hub 46 by means of a form engagement with the engagement hubs. The floating member 48 has a first form engagement with the first engagement hub 44 configured to enable transmission of torque from the floating member to the first engagement hub 44 around an axis which is parallel to the first axis of rotation 32'. The floating member 48 has a second form engagement with the second engagement hub 46 configured to enable transmission of torque from the second engagement hub 46 to the floating member 48 around an axis which is parallel to the first axis of rotation 32' as well. The first form engagement is configured such that the floating member 48 can move in first lateral direction only in respect to the first axis of rotation 32' bounded and ruled by the first form engagement. Also the second form engagement is configured such that the floating member 48 can move in second lateral direction only in respect to the second axis of rotation 34' bounded and ruled by the second form engagement. The first and the second engagement hubs can be rigidly or removable connected to the respective shafts.

The flange part 40 of the lead-though unit 36 is assembled to an opening 50 of the enclosure 12, particularly the second part 12" thereof, so as to close the opening. The flange part 40 is arranged such that the first axis of rotation 32' is substantially a center axis of the opening. The opening for the lead-through unit is configured large enough such that the second engagement hub 46 can be entered inside the enclosure 12 through the opening.

When the valve 14 needs to be serviced or access is desired for other reasons the flange part 40 is disassembled (figure 2) from the opening 50 in the second part 12" of the enclosure 12 and the actuation shaft 34 and the second engagement hub 46 is taken out of the unit through the opening 50, and now the sleeve part 12" can be moved axially and the access to the valve is provided. This way the enclosure is operationally telescopic. The enclosure according to the invention which is in tubular form arranged coaxially with the gas pipe 11, but having slightly greater diameter, particularly utilizes the advantage of short axial dimension of the coupling 38. According an embodiment of the invention the also the first engagement hub 44 and the floating member 48 can be dimensioned so that one or both of them are removable through the opening 50. In such a case the first engagement hub 44, the floating member 48 and second engagement hub 46 are advantageously configured to follow the flange part 40 when removed.

In the embodiment shown in the figures 1 and 2 the access opening 55 is formed such that there is an axial section in the enclosure 12 in which the opening 55 extends in lengthwise over an axial distance and angularly around the whole circle. It could be said that a portion of the first part 12' is cut away or removed. As is depicted by the dotted line in the figure 2 the access opening 55' can in some practical solutions be only a smaller hole as required, in the first body part 12" of the enclosure 12.

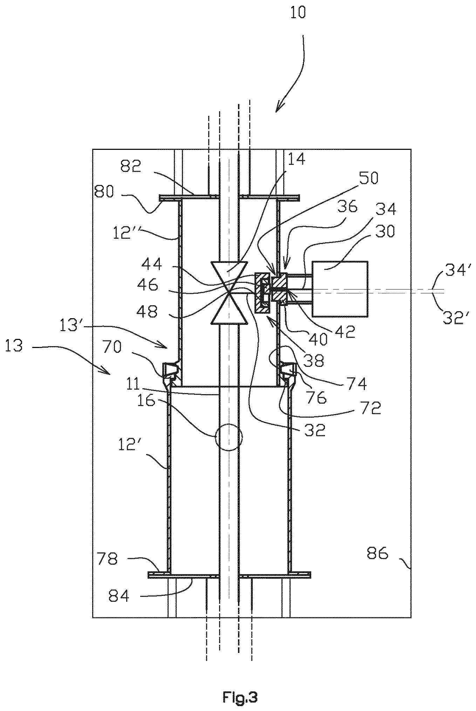

In the figure 3 there is shown another embodiment of the invention. The gas supply system 10 is to a great extent corresponding to the embodiment shown in the figures 1 and 2. The features in the figure 3 are referred to by using corresponding reference numbers to the figure 1 and 2. The enclosure 12 shown in the figure 3 comprises respectively a first part 12' and a second part 12" which both are of tubular form like in the embodiment of the figures 1 and 2. Practically the main difference of the enclosure 12 in the figure 3 to the figures 1 and 2 is the coupling between the first ends 13, 13' of the first and the second parts 12', 12" and also that both the first and the second part are removably assembled in slideable manner in respect to each other. Additionally, the first part 12' of the enclosure is arranged to be slideably inside the second part 12".

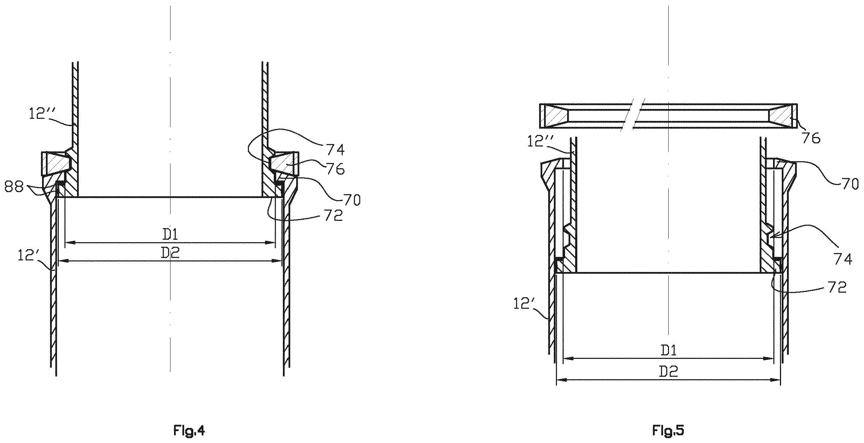

As is shown in the figures 3, 4 and 5 the first part 12' has a first end 13 and the second part 12" has a first end 13', and the first ends 13, 13' of the enclosure are at least partly one inside the other. In this embodiment the first part 12' of the enclosure is outside the second part 12", the parts being coaxially with each other. The first end 13 of the first part 12' is provided with a radially inwards extending first flange 70, and the first end 13' of the second part 12" is provided with a radially outwards extending second flange 72. As is shown in the figures 3 and in more detained manner in the figures 4 and 5, the first flange 70 is arranged outside the second part 12" of the enclosure, axially outer side of the second flange 72, and the second flange 72 is respectively arranged inside the first part 12' of the enclosure 12, axially behind or inner side of the first flange 70. The first flange 70 has a radially inner diameter D1 and the second flange 72 has a radially outer diameter D2 wherein the inner diameter of the first flange 70 is smaller than the outer diameter of the second flange 72, such that the first flange 70 is prevented from axially passing by the second flange 72 and vice versa. This way the flanges 70, 72 of the sleeve parts can be axially pressed against each other. This configuration also facilitates the telescoping function of the gas supply system 10. Moreover, in case the internal gas pressure increases in the enclosure for any reasons (such as leak in the gas pipe 11), the higher the pressure in the enclosure 12, the tighter the flanges are caused to be pressed against each other by the internal pressure. It is also apparent that the first part and the second part can be at different rotational positions in respect to the longitudinal axis of the enclosure and therefore the radial direction of the opening 50 for the flange part 40 in the enclosure 12 can be more freely selected.

Figure 4 shows a detail of the enclosure 12 in a position where the flanges of the first part 12' and the second part 12" of the enclosure are attached to each other. Figure 5 in turn shows a detail of the enclosure 12 in a position where the flanges of the first part 12' and the second part 12" of the enclosure are detached from each other. The second part 12" of the enclosure 12 is provided with a circular groove 74 on its outer surface arranged at axial distance from the second flange 72. Said distance is substantially equal to axial dimension i.e. thickness of the first flange 70.The groove 74 is used for axially tightening and sealing the first and the second flanges against each other, i.e. to provide an initial pressing force. The first part 12' of the enclosure and the second part 12" of the enclosure are releasably locked by a ring element 76, such as a ring clamp, arranged into the groove 74 such that the ring element axially presses the first flange 70 against the second flange 72. The ring clamp may be comprised of two or more ring sections to facilitate its installation around the enclosure 12.There is an axial and radial seal 88 between the first and the second flange. The circular groove and the ring element have mating wedge-like shapes i.e. they both have radially inwards gradually decreasing axial dimension. One side of the clamp 76 is configured to press axially the inwardly extending flange 72 while another side of the clamp 76 is configured to press axially a side wall of the wedge shaped groove 74. Thus tightening the clamp 76 radially causes an axial force pressing the flanges 70, 72 against each other. In the Figure 5 the clamp 76 has been removed from the groove 74 which makes it possible to axially move the first part 12' and the second part 12" in respect to each other.

As it becomes clear from the figure 3 first part 12' and the second part 12" of the enclosure 12 are both provided with a flange 78,80 at their ends opposite to the first ends 13,13' thereof, which can be called as second ends. The first part 12' and the second part 12' are removably attached to a body parts 82, 84 of the gas supply system 10 by means of the flanges 78,80. The body part 82,84 are a part of or attached to a body or a frame 86 of the gas supply system 10. In the embodiment shown in the figure 3 the auxiliary devices 16 comprises particularly a gas filter and the valve 14. When the valve 14 or the filter needs to be serviced or access is desired for other reasons the ring element 76 is disassembled (figure 3) and either one of the first and the second parts 12', 12" is moved axially in respect to each other. If the filter needs to be accessed the first part 12' of the enclosure 12 moved and if the valve 14 needs to be accessed the second part 12" is moved. Of course, the parts of the valve actuator 30 extending outwards from the second part 12" need to be removed first. This way the enclosure is operationally telescopic.

According to an embodiment of the invention the gas supply system 10 system is configured so auxiliary system does not necessarily comprise the valve 14, in other words the valve is excluded from the enclosure 12 but for example the gas filter is enclosed by the enclosure 12. Also in this embodiment the filter can be serviced by making use of the effects of the invention.

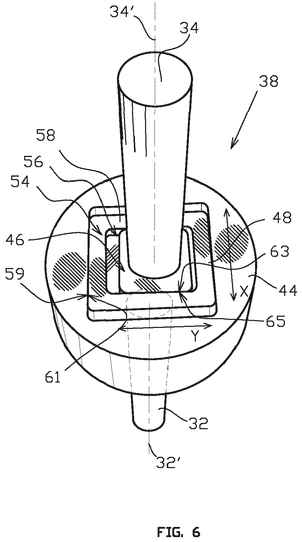

Figure 6 discloses an embodiment of a coupling 38 in the valve 14 according to the invention in more detailed manner. The corresponding parts shown in the figure 1 and in the figure 2 are referred to by a corresponding numbers. The coupling 38 is configured to allow mutual lateral displacement of the ends of the drive shaft 32 and the actuating shaft 34. The first engagement hub 44 of the coupling 38 is provided with a lateral rectangular, advantageously square, recess 54 at its end face. The floating member 48 is also rectangular, advantageously square, having its two sides shorter than two opposite sides of the recess 54 such that the floating member 48 is fitted into the recess 54 with a suitable lateral (perpendicular to the first rotational axis) play in a first lateral direction X only. The floating member is provided with rectangular, advantageously square, cut-out through its thickness, or recess 56, circumscribed by a periphery section 58. The second engagement hub 46 at the end of the actuating shaft 34 is also formed to be laterally rectangular, advantageously square, and having a flat end face. The second engagement hub 46 has a side length shorter than the two adjacent sides of the recess 56 in the floating member 48 so that the second engagement hub 46 may be arranged into the recess 56 of the floating member 48. The second engagement hub 46 is fitted into the floating member 48 with a suitable lateral (perpendicular to the first rotational axis) clearance in a second lateral direction Y only. The first and the second lateral directions are perpendicular to each other. A plane defined by the first and the second lateral direction is perpendicular to the first rotational axis 32'. The coupling is configured such that the drive shaft rotates with the same speed and the actuating shaft.

This way the first engagement hub 44, floating member 48 and the second engagement hub 46 are mutually dimensionally formed so as to transmit torque between the engagement hubs via the floating member 48. A laterally outer wall 59 of periphery section 58 of the floating member 48 and laterally inner wall 61 of the recess 56 in the first engagement hub 44 constitutes the first form engagement with the first engagement hub 44 configured to enable transmission of torque from the floating member to the first engagement hub 44. A laterally inner wall 63 of the periphery section 58 of the floating member 48 and laterally outer wall 65 of the second engagement hub 46 constitutes the second form engagement with the second engagement hub 46 configured to enable transmission of torque from the second engagement hub 46 to the floating member 48. The floating member 48 can move laterally in respect to the first axis of rotation 32' bounded and ruled by the first form engagement and the second form engagement. In this embodiment the second engagement hub 46 is arranged to extend axially inside the first engagement hub 44 and the floating member 48. Also the first form engagement and second form engagement are laterally nested or inside each other. In other words the form engagement are substantially at a same axial position, not one after the other. This way the axial length of the coupling 38 is minimized. In the gas supply system this means in practise that the radial gap between the valve 14 and the wall of the enclosure 12 is also minimized providing space and material savings.

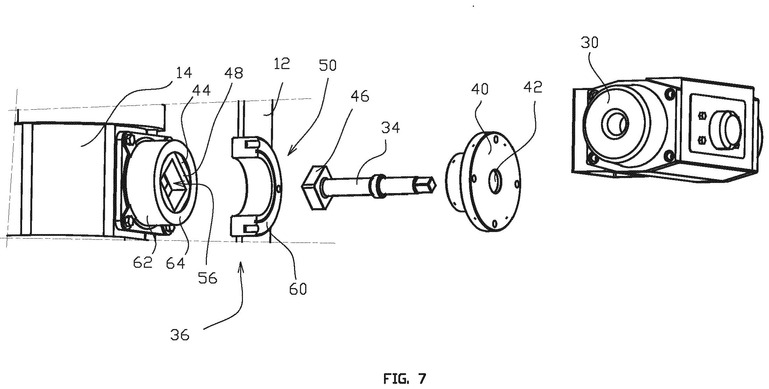

Figure 7 discloses a section of a gas supply system according to another embodiment of the invention. Also here the corresponding parts shown in the figure 4 and in the figure 1 are referred to by a corresponding numbers. In the embodiment of the figure 4 the lead-through unit is shown dismantled so that the main parts are separated from each other. In this embodiment the lead-through unit 36 comprises a support sleeve 60 which is rigidly connected e.g. by welding to the enclosure 12. Thus the flange part 40 of the lead-through unit 36 is assembled to an opening of the support sleeve 60. The opening for the flange part 52 of the lead-through unit is configured large enough such that the second engagement hub 46 can be entered inside the enclosure 12 through the opening. Additionally in this embodiment the floating member 48 is retained in the recess of the first engagement hub 48 by a retainer cup 62. The retainer cup comprises a cylindrical sleeve arranged coaxially with the drive shaft 32 of the valve 14 which sleeve is provided with inwardly extending collar 64, which partly cover the floating member 48 and prevents the floating member 48 to come loose of its proper position. Figure 4 also depicts how the valve 14 and/or the actuator 30 can be advantageously assembled and/disassembled according to the invention. In the figure 4 the parts are separated. If the valve 14 has been removed from the gas pipe 11, the valve 14 is first connected to its position. Provided that the first engagement hub 44 is removably installed to the drive shaft 32, if not already installed, the first engagement hub 44 is attached to the drive shaft 32. Next the floating member 48 is put into its position in the recess of the first engagement hub and the retainer cup 62 is assembled. When the valve 14 is attached properly to the gas pipe 11, the actuating shaft 34 is taken partly inside the opening either in the enclosure 12 or in the support sleeve 60 so that the second engagement hub is simultaneously taken into the cut-out 56 of the floating member 48. The flange part 40 is assembled to the opening either in the enclosure 12 or in the support sleeve 60 so that the actuating shaft 34 is arranged to extend through the flange part 40. And finally the actuating shaft 34 is coupled to the actuator 30 which is removably connected to e.g. the flange part 40. Disassembly takes place is reverse order.

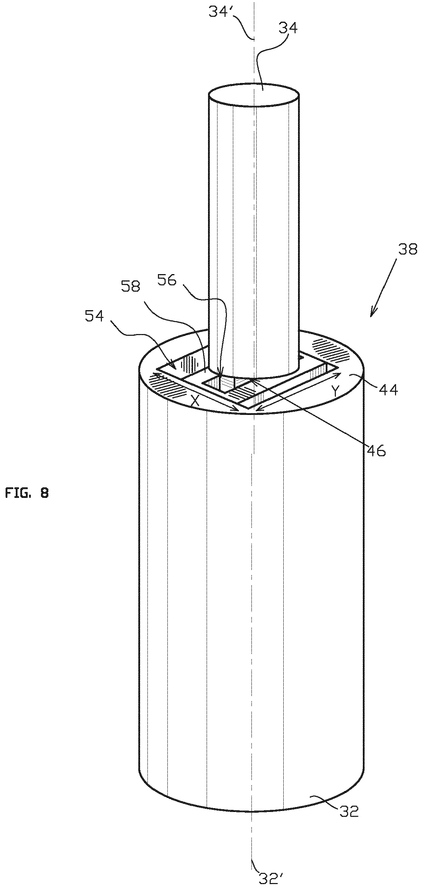

Figure 8 discloses an embodiment of a coupling 38 according to the invention. The coupling corresponds to that shown in the figure 2 and corresponding parts shown in the figure 2 and in the figure 6 are referred to by a corresponding numbers. The coupling 38 is configured to allow mutual lateral displacement of the ends of the drive shaft 32 and the actuating shaft 34. The first engagement hub 44 of the coupling 38 is provided with a lateral rectangular recess 54 at its end face. The first engagement hub 44 has a diameter equal to the drive shaft 32. Here the first engagement hub 44 is an integral part of the drive shaft 32. The floating member 48 is also rectangular having its two sides shorter than two opposite sides of the recess 54 such that the floating member 48 is fitted into the recess 54 with a suitable lateral (perpendicular to the first rotational axis) play in a first lateral direction X only. The floating member is provided with rectangular cut-out through its thickness, or recess 56, circumscribed by a periphery section 58. The second engagement hub 46 at the end of the actuating shaft 34 is also formed to be laterally rectangular, which has lateral dimension smaller or equal to the diameter of the actuating shaft 34. The second engagement hub 46 is fitted into the floating member 48 with a suitable lateral (perpendicular to the first rotational axis) clearance in a second lateral direction Y only. The first and the second lateral directions are perpendicular to each other. A plane defined by the first and the second lateral direction is perpendicular to the first rotational axis 32'.

In case of a practical circumstances would not require space savings as much as is available using the coupling shown in the figures 1 to 4, the coupling can be realized so that the a first engagement hub 44 at the end of the drive shaft 32 of the valve 14 and the second engagement hub 46 at the end of the actuating shaft 34 are provided with a cross directional groove at their end faces running through the rotational axis. The floating member is a disk like member having cross directional tongues at each face arranged perpendicular to each other. When coupled, the tongue and groove on one side is perpendicular to the tongue and groove on the other. The floating member rotates around its center at the same speed as the actuating shaft and drive shaft.

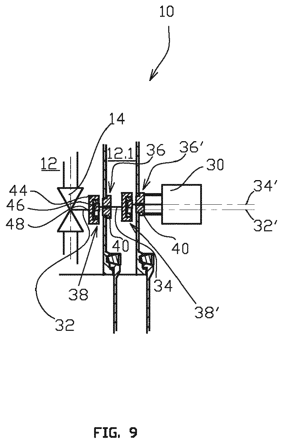

Figure 9 shows an embodiment of the invention where the gas supply system comprises an inner enclosure 12 and at least one an outer enclosure 12.1 in which the outer enclosure encloses the inner enclosure 12. This should be understood that, even if not shown, also in the other embodiments of the invention may be provided with nested enclosures. The corresponding parts shown in the figure 9 and in the figures 3, 4 and 5 are referred to by a corresponding numbers. In the embodiment shown in the figure 9 the gas supply system the enclosures 12, 12.1 are tubular and arranged coaxially with the pipe 11 and each other. The rotational movement of the drive shaft 32 of the valve is accomplished by arranging two force transmission couplings 38 according to the embodiments of figures 1 to 5 in series. Thus the actuating shaft 34 of the first tier coupling is coupled to the force transmission coupling 38' of the second tier coupling. The actuating shaft 34 of the second force transmission coupling 38' is arranged rotatably to the shaft lead-through unit 36' arranged to the wall of the outer enclosure 12.1 so as to extend from inside to outside of the enclosure 12, 12.1. Even if not shown both the transmission couplings can be arranged removably through the opening in the outer enclosure 12.1 as is explained in connection with the figure 2. The inner enclosure 12 may be provided with a connection to an gas source such as inert gas source which is configured to maintain the pressure in the inner enclosure at higher level than in the pipe 11 so that in the case of leak of the pipe 11 the gas flows from the enclosure to the pipe 11 and the gas in the pipe cannot escape into the inner enclosure 12.

The invention is defined the appended claims.

## Claims

1. A gas supply system comprising a gas pipe (11) for transporting gas, an auxiliary device (14,16) arranged to the gas pipe, an enclosure for enclosing the gas pipe and the auxiliary device (14, 16), and an inlet (18) and an outlet (20), in which gas supply system (10) the gas pipe (11) is arranged to extend inside the enclosure (12) from the inlet (18) of the enclosure (12) to the outlet (20) of the enclosure (12), **characterized in that** the enclosure (12) is of tubular form comprising a tubular first part (12') and a tubular second part (12"), and that
the first part (12') and the second part (12") are at least partly one inside the other and at least one of which is configured axially slideable in respect to the other, and that
the enclosure (12) is provided with an access opening (55,55'), wherein at least the other one of the first (12') and the second part (12") is configured to cover the access opening (55,55') in its first axial position and uncover the access opening (55,55') in its second axial position.

2. A gas supply system (10) according to claim 1, **characterized in that** the auxiliary device comprises a gas valve (14).

3. A gas valve unit (10) according to claim 1, **characterized in that** the first part (12') has a cross sectional shape which is similar to a cross sectional shape of the second part.

4. A gas supply system (10) according to claim 1 or 3, **characterized in that** first part (12') and the second part (12") have circular cross section.

5. A gas supply system (10) according to claim 1 or 3, **characterized in that** the first part (12') and the second part (12") are coaxially arranged in respect to each other.

6. A gas supply system (10) according to claim 1, **characterized in that** the first part (12') has a first end (13) and the second part (12") has a first end (13'), and that the first ends (13, 13') are axially at least partly one inside the other and that the first end (13) of the first part (12') is provided with a radially inwards extending first flange (70), and that the first end (13') of the second part (12") is provided with a radially outwards extending second flange (72), wherein the first flange (70) is arranged outside the second part (12") of the enclosure (12), and the second flange (72) is arranged inside the first part (12') of the enclosure (12).

7. A gas supply system (10) according to claim 6, **characterized in that** the first flange (70) has an inner diameter (D1) and the second flange (72) has an outer diameter (D2) wherein the inner diameter (D1) is smaller than the outer diameter (D2), such that the first flange (70) is prevented from axially passing by the second flange (72).

8. A gas supply system (10) according to claim 6, **characterized in that** the second part (12") of the enclosure is provided with a circular groove (74) arranged at axial distance from the second flange (72) wherein the first part (12') of the enclosure and the second part (12") of the enclosure are releasably locked by a ring element (76) arranged into the groove (74) such that it axially presses the first flange (70) against the second flange (72).

9. A gas supply system (10) according to claim 1, **characterized in that** the auxiliary device comprises a gas valve (14) and that the valve (14) is operable by subjecting a rotational movement to the drive shaft (32) of the valve (14), the gas supply system further comprising a shaft lead-through unit (36) releasably connected to the second part (12") of the enclosure (12) in gas tight manner, into which shaft lead-through unit (36) the drive shaft (32) is arranged so as to extend from inside to outside of the enclosure (12), and that
the drive shaft (32) and the actuating shaft (34) are arranged in force transmission connection with each other by a coupling (38) which is configured to allow mutual lateral displacement of the ends of the drive shaft (32) and the actuating shaft (34).

10. A gas supply system (10) according to claim 9, **characterized in that** the shaft lead-through unit (36) is releasably connected to the second part (12") of the enclosure (12).

11. A gas supply system (10) according to claim 9, **characterized in that** the shaft lead-through unit (36) comprises a flange part (40) provided with a cylindrical opening (42) into which the drive shaft (32) is assembled rotationally and in gas tight manner.

12. A gas supply system (10) according to claim 9, **characterized in that** the shaft lead-through unit (36) is configured to be assembled and/or disassembled from outside the enclosure (12).

13. A gas supply system (10) according to claim 8 or 12, **characterized in that** the actuating shaft (34) is configured to be assembled and/or disassembled from outside the enclosure (12).

14. A gas supply system (10) according to claim 9 **characterized in that** the coupling (38) comprise a first engagement hub (44) at the end of the drive shaft (32) of the valve (14) and a second engagement hub (46) at the end of the actuating shaft (34) and a floating member (48) between the first and the second engagement hub.

15. A gas supply system (10) according to claim 14, **characterized in that** the floating member (48) has a first form engagement with the first engagement hub (44) configured to enable transmission of torque between the floating member (48) and the first engagement hub (44), and the floating member (48) has a second form engagement with the second engagement hub (46) configured to enable transmission of torque between the second engagement hub (46) to the floating member (48).

16. A gas supply system (10) according to claim 15, **characterized in that** the first form engagement is configured such that the floating member (48) is movable in first lateral direction only in respect to the first axis of rotation (32') and the second form engagement is configured such that the floating member (48) is movable in second lateral direction only in respect to the second axis of rotation (34').

17. A gas supply system (10) according to claim 16, **characterized in that** the first engagement hub (44) of the coupling (38) is provided with a lateral rectangular recess (54) at its end face, and that the floating member (48) is rectangular having its sides shorter than sides of the recess (54) such that the floating member (48) is fitted into the recess (54), and that the floating member is provided with rectangular cut-out (56) circumscribed by a periphery section (58), and that the second engagement hub (46) is formed to be laterally rectangular and it has a side length shorter than the sides of the recess (56) in the floating member (48), and that the second engagement hub (46) is arranged into the recess (56) of the floating member (48).

18. A gas supply system (10) according to claim 14, **characterized in that** the second engagement hub (46) is arranged to extend axially inside the first engagement hub (44) and the floating member (48).

## Patentansprüche

1. Gaszufuhrsystem, das ein Gasrohr (11) zum Transportieren von Gas, eine Hilfsvorrichtung (14, 16), die an dem Gasrohr eingerichtet ist, einen Einschluss zum Einschließen des Gasrohrs und der Hilfsvorrichtung (14, 16) und einen Einlass (18) sowie einen Auslass (20) umfasst, wobei bei dem Gaszufuhrsystem (10) das Gasrohr (11) eingerichtet ist, um sich innerhalb des Einschlusses (12) von dem Einlass (18) des Einschlusses (12) zu dem Auslass (20) des Einschlusses (12) zu erstrecken, **dadurch gekennzeichnet, dass** der Einschluss (12) eine Rohrform aufweist, die einen rohrförmigen ersten Teil (12') und einen rohrförmigen zweiten Teil (12") umfasst, und dass
der erste Teil (12') und der zweite Teil (12") mindestens teilweise ineinander liegen und mindestens einer davon axial in Bezug auf den anderen verschiebbar konfiguriert ist, und dass
der Einschluss (12) mit einer Zugangsöffnung (55, 55') versehen ist, wobei mindestens der andere des ersten (12') und des zweiten Teils (12") dazu konfiguriert ist, die Zugangsöffnung (55, 55') in ihrer ersten axialen Position zu bedecken, und die Zugangsöffnung (55, 55') in ihrer zweiten axialen Position freizulegen.

2. Gaszufuhrsystem (10) nach Anspruch 1, **dadurch gekennzeichnet, dass** die Hilfsvorrichtung ein Gasventil (14) umfasst.

3. Gasventil (10) nach Anspruch 1, **dadurch gekennzeichnet, dass** der erste Teil (12') eine Querschnittgestalt aufweist, die einer Querschnittgestalt des zweiten Teils ähnlich ist.

4. Gaszufuhrsystem (10) nach Anspruch 1 oder 3, **dadurch gekennzeichnet, dass** der erste Teil (12') und der zweite Teil (12") kreisförmigen Querschnitt aufweisen.

5. Gaszufuhrsystem (10) nach Anspruch 1 oder 3, **dadurch gekennzeichnet, dass** der erste Teil (12') und der zweite Teil (12") zueinander koaxial eingerichtet sind.

6. Gaszufuhrsystem (10) nach Anspruch 1, **dadurch gekennzeichnet, dass** der erste Teil (12') ein erstes Ende (13) aufweist, und der zweite Teil (12") ein erstes Ende (13') aufweist, und dass die ersten Enden (13, 13') axial mindestens teilweise ineinander liegen, und dass das erste Ende (13) des ersten Teils (12') mit einem sich radial nach innen erstreckenden ersten Flansch (70) versehen ist, und dass das erste Ende (13') des zweiten Teils (12") mit einem sich radial nach außen erstreckenden zweiten Flansch (72) versehen ist, wobei der erste Flansch (70) außerhalb des zweiten Teils (12") des Einschlusses (12) eingerichtet ist, und der zweite Flansch (72) innerhalb des ersten Teils (12') des Einschlusses (12) eingerichtet ist.

7. Gaszufuhrsystem (10) nach Anspruch 6, **dadurch gekennzeichnet, dass** der erste Flansch (70) einen Innendurchmesser (D1) aufweist, und dass der zweite Flansch (72) einen Außendurchmesser (D2) aufweist, wobei der Innendurchmesser (D1) derart kleiner ist als der Außendurchmesser (D2), dass der erste Flansch (70) daran gehindert wird, axial an dem zweiten Flansch (72) vorbeizugehen.

8. Gaszufuhrsystem (10) nach Anspruch 6, **dadurch gekennzeichnet, dass** der zweite Teil (12") des Einschlusses mit einer kreisförmigen Nut (74) versehen ist, die in einem Axialabstand von dem zweiten Flansch (72) eingerichtet ist, wobei der erste Teil (12') des Einschlusses und der zweite Teil (12") des Einschlusses freigebbar von einem Ringelement (76) verriegelt sind, das in der Nut (74) derart eingerichtet ist, dass es den ersten Flansch (70) axial gegen den zweiten Flansch (72) presst.

9. Gaszufuhrsystem (10) nach Anspruch 1, **dadurch gekennzeichnet, dass** die Hilfsvorrichtung ein Gasventil (14) umfasst, und dass das Ventil (14) betätigbar ist, indem der Antriebswelle (32) des Ventils (14) eine Drehbewegung auferlegt wird, wobei das Gaszufuhrsystem weiter eine Wellendurchführungseinheit (36) umfasst, die freigebbar mit dem zweiten Teil (12") des Einschlusses (12) in gasdichter Art verbunden ist, wobei die Antriebswelle (32) in die Wellendurchführungseinheit (36) derart eingerichtet ist, dass sie sich von dem Inneren zu dem Äußeren des Einschlusses (12) erstreckt, und dass
die Antriebswelle (32) und die Betätigungswelle (34) in Kraftübertragungsverbindung miteinander durch eine Kopplung (38) eingerichtet sind, die dazu konfiguriert ist, gegenseitige seitliche Verlagerung der Enden der Antriebswelle (32) und der Betätigungswelle (34) zu erlauben.

10. Gaszufuhrsystem (10) nach Anspruch 9, **dadurch gekennzeichnet, dass** die Wellendurchführungseinheit (36) freigebbar mit dem zweiten Teil (12") des Einschlusses (12) verbunden ist.

11. Gaszufuhrsystem (10) nach Anspruch 9, **dadurch gekennzeichnet, dass** die Wellendurchführungseinheit (36) ein Flanschteil (40) umfasst, das mit einer zylindrischen Öffnung (42) versehen ist, in die die Antriebswelle (32) drehend und in gasdichter Art zusammengefügt ist.

12. Gaszufuhrsystem (10) nach Anspruch 9, **dadurch gekennzeichnet, dass** die Wellendurchführungseinheit (36) dazu konfiguriert ist, von außerhalb des Einschlusses (12) zusammengefügt und/oder auseinandergenommen zu werden.

13. Gaszufuhrsystem (10) nach Anspruch 8 oder 12, **dadurch gekennzeichnet, dass** die Betätigungswelle (34) dazu konfiguriert ist, von außerhalb des Einschlusses (12) zusammengefügt und/oder auseinandergenommen zu werden.

14. Gaszufuhrsystem (10) nach Anspruch 9, **dadurch gekennzeichnet, dass** die Kopplung (38) eine erste Eingriffsnabe (44) an dem Ende der Antriebswelle (32) des Ventils (14) und eine zweite Eingriffsnabe (46) an dem Ende der Betätigungswelle (34) sowie ein schwebendes Element (48) zwischen der ersten und der zweiten Eingriffsnabe umfasst.

15. Gaszufuhrsystem (10) nach Anspruch 14, **dadurch gekennzeichnet, dass** das schwebende Element (48) einen ersten Formeingriff mit der ersten Eingriffsnabe (44) aufweist, der dazu konfiguriert ist, Drehmomentübertragung zwischen dem schwebenden Element (48) und der ersten Eingriffsnabe (44) zu ermöglichen, und das schwebende Element (48) einen zweiten Formeingriff mit der zweiten Eingriffsnabe (46) aufweist, der dazu konfiguriert ist, Drehmomentübertragung zwischen der zweiten Eingriffsnabe (46) und dem schwebenden Element (48) zu ermöglichen.

16. Gaszufuhrsystem (10) nach Anspruch 15, **dadurch gekennzeichnet, dass** der erste Formeingriff derart konfiguriert ist, dass das schwebende Element (48) in einer ersten seitlichen Richtung nur in Bezug auf die erste Rotationsachse (32') bewegbar ist, und der zweite Formeingriff derart konfiguriert ist, dass das schwebende Element (48) in der zweiten seitlichen Richtung nur in Bezug auf die zweite Rotationsachse (34') bewegbar ist.

17. Gaszufuhrsystem (10) nach Anspruch 16, **dadurch gekennzeichnet, dass** die erste Eingriffsnabe (44) der Kopplung (38) mit einer seitlichen rechteckigen Vertiefung (54) an ihrer Endfläche versehen ist, und dass das schwebende Element (48) rechteckig ist, wobei seine Seiten derart kürzer sind als die Seiten der Vertiefung (54), dass das schwebende Element (48) in die Vertiefung (54) gepasst ist, und dass das schwebende Element mit einem rechteckigen Ausschnitt (56) versehen ist, der von dem Umfangsteilabschnitt (58) umgebe, ist, und dass die zweite Eingriffsnabe (46) dazu geformt ist, seitlich rechteckig zu sein und eine Seitenlänge aufweist, die kürzer ist als die Seiten der Vertiefung (56) in dem schwebenden Element (48), und dass die zweite Eingriffsnabe (46) in die Vertiefung (56) des schwebenden Elements (48) eingerichtet ist.

18. Gaszufuhrsystem (10) nach Anspruch 14, **dadurch gekennzeichnet, dass** die zweite Eingriffsnabe (46) dazu eingerichtet ist, sich axial innerhalb der ersten Eingriffsnabe (44) und des schwebenden Elements (48) zu erstrecken.

## Revendications

1. Système d'alimentation en gaz comprenant un tuyau de gaz (11) pour transporter du gaz, un dispositif auxiliaire (14, 16) disposé sur le tuyau de gaz, une enceinte pour renfermer le tuyau de gaz et le dispositif auxiliaire (14, 16), et une entrée (18) et une sortie (20), dans lequel système d'alimentation en gaz (10) le tuyau de gaz (11) est agencé pour s'étendre à l'intérieur de l'enceinte (12) de l'entrée (18) de l'enceinte (12) à la sortie (20) de l'enceinte (12), **caractérisé en ce que** l'enceinte (12) est de forme tubulaire comprenant une première partie tubulaire (12') et une deuxième partie tubulaire (12"), et **en ce que**
la première partie (12') et la deuxième partie (12'') sont au moins partiellement l'une à l'intérieur de l'autre et dont au moins l'une est configurée pour coulisser axialement par rapport à l'autre, et **en ce que**
l'enceinte (12) est pourvue d'une ouverture d'accès (55, 55'), dans laquelle au moins l'autre de la première (12') et de la deuxième partie (12") est configurée pour couvrir l'ouverture d'accès (55, 55') dans sa première position axiale et découvrir l'ouverture d'accès (55, 55') dans sa deuxième position axiale.

2. Système d'alimentation en gaz (10) selon la revendication 1, **caractérisé en ce que** le dispositif auxiliaire comprend une soupape à gaz (14).

3. Unité de soupape de gaz (10) selon la revendication 1, **caractérisée en ce que** la première partie (12') présente une forme en coupe transversale qui est similaire à une forme en coupe transversale de la deuxième partie.

4. Système d'alimentation en gaz (10) selon la revendication 1 ou 3, **caractérisé en ce que** la première partie (12') et la deuxième partie (12") présentent une section transversale circulaire.

5. Système d'alimentation en gaz (10) selon la revendication 1 ou 3, **caractérisé en ce que** la première partie (12') et la deuxième partie (12") sont disposées coaxialement l'une par rapport à l'autre.

6. Système d'alimentation en gaz (10) selon la revendication 1, **caractérisé en ce que** la première partie (12') présente une première extrémité (13) et la deuxième partie (12") présente une première extrémité (13'), et **en ce que** les premières extrémités (13, 13') sont axialement au moins partiellement l'une dans l'autre et **en ce que** la première extrémité (13) de la première partie (12') est pourvue d'une premières bride s'étendant radialement vers l'intérieur (70), et que la première extrémité (13') de la deuxième partie (12") est pourvue d'un deuxième bride (72) s'étendant vers l'extérieur, dans lequel la première bride (70) est agencée à l'extérieur de la deuxième partie (12") de l'enceinte (12), et la deuxième bride (72) est agencée à l'intérieur de la première partie (12') de l'enceinte (12) .

7. Système d'alimentation en gaz (10) selon la revendication 6, **caractérisé en ce que** la première bride (70) présente un diamètre intérieur (D1) et la deuxième bride (72) présente un diamètre extérieur (D2), dans lequel le diamètre intérieur (D1) est inférieur au diamètre extérieur (D2), de sorte que la première bride (70) soit empêchée de passer axialement par le deuxième bride (72).

8. Système d'alimentation en gaz (10) selon la revendication 6, **caractérisé en ce que** la deuxième partie (12") de l'enceinte est pourvue d'une rainure circulaire (74) disposée à distance axiale de la deuxième bride (72), dans lequel la première partie (12') de l'enceinte et la deuxième partie (12") de l'enceinte est verrouillée de manière amovible par un élément annulaire (76) agencé dans la rainure (74) de telle sorte qu'il presse axialement la première bride (70) contre le deuxième bride (72).

9. Système d'alimentation en gaz (10) selon la revendication 1, **caractérisé en ce que** le dispositif auxiliaire comprend une soupape de gaz (14) et que la soupape (14) est actionnable en soumettant un mouvement de rotation à l'arbre d'entraînement (32) de la soupape (14), le système d'alimentation en gaz comprenant en outre une unité de passage d'arbre (36) raccordée de manière amovible à la deuxième partie (12") de l'enceinte (12) de manière étanche au gaz, dans laquelle unité de passage d'arbre (36), l'arbre d'entraînement (32) est agencé de manière à s'étendre de l'intérieur vers l'extérieur de l'enceinte (12), et **en ce que** l'arbre d'entraînement (32) et l'arbre d'actionnement (34) sont agencés en liaison de transmission de force l'un avec l'autre par un accouplement (38) qui est configuré pour permettre un déplacement latéral mutuel des extrémités de l'arbre d'entraînement (32) et de l'arbre d'actionnement (34).

10. Système d'alimentation en gaz (10) selon la revendication 9, **caractérisé en ce que** l'unité de passage d'arbre (36) est raccordée de manière amovible à la deuxième partie (12") de l'enceinte (12).

11. Système d'alimentation en gaz (10) selon la revendication 9, **caractérisé en ce que** l'unité de passage d'arbre (36) comprend une partie de bride (40) munie d'une ouverture cylindrique (42) dans laquelle l'arbre d'entraînement (32) est assemblé en rotation et de manière étanche aux gaz.

12. Système d'alimentation en gaz (10) selon la revendication 9, **caractérisé en ce que** l'unité de passage d'arbre (36) est configurée pour être montée et/ou démontée depuis l'extérieur de l'enceinte (12).

13. Système d'alimentation en gaz (10) selon la revendication 8 ou 12, **caractérisé en ce que** l'arbre d'actionnement (34) est configuré pour être monté et/ou démonté depuis l'extérieur de l'enceinte (12).

14. Système d'alimentation en gaz (10) selon la revendication 9, **caractérisé en ce que** l'accouplement (38) comporte un premier moyeu d'engagement (44) à l'extrémité de l'arbre d'entraînement (32) de la soupape (14) et un deuxième moyeu d'engagement (46) à l'extrémité de l'arbre d'actionnement (34) et un élément flottant (48) entre le premier et le deuxième moyeu d'engagement.

15. Système d'alimentation en gaz (10) selon la revendication 14, **caractérisé en ce que** l'élément flottant (48) présente une première forme d'engagement avec le premier moyeu d'engagement (44) configurée pour permettre la transmission de couple entre l'élément flottant (48) et le premier moyeu d'engagement (44), et l'élément flottant (48) présente une deuxième forme d'engagement avec le deuxième moyeu d'engagement (46) configuré pour permettre la transmission de couple entre le deuxième moyeu d'engagement (46) et l'élément flottant (48).

16. Système d'alimentation en gaz (10) selon la revendication 15, **caractérisé en ce que** la première forme d'engagement est configurée de sorte que l'élément flottant (48) soit mobile dans la première direction latérale uniquement par rapport au premier axe de rotation (32') et la deuxième forme d'engagement est configurée de sorte que l'élément flottant (48) soit mobile dans la deuxième direction latérale uniquement par rapport au deuxième axe de rotation (34').

17. Système d'alimentation en gaz (10) selon la revendication 16, **caractérisé en ce que** le premier moyeu d'engagement (44) de l'accouplement (38) est pourvu d'un évidement rectangulaire latéral (54) au niveau de sa face d'extrémité, et **en ce que** l'élément flottant (48) est rectangulaire ayant ses côtés plus courts que les côtés de l'évidement (54) de sorte que l'élément flottant (48) soit ajusté dans l'évidement (54), et **en ce que** l'élément flottant est pourvu d'une découpe rectangulaire (56) circonscrite par une section périphérique (58), et **en ce que** le deuxième moyeu d'engagement (46) est formé afin d'être latéralement rectangulaire et il présente une longueur de côté plus courte que les côtés de l'évidement (56) dans l'élément flottant (48), et que le deuxième moyeu d'engagement (46) est agencé dans l'évidement (56) de l'élément flottant (48).

18. Système d'alimentation en gaz (10) selon la revendication 14, **caractérisé en ce que** le deuxième moyeu d'engagement (46) est agencé pour s'étendre axialement à l'intérieur du premier moyeu d'engagement (44) et de l'élément flottant (48).
